# EUROPÄISCHE PATENTSCHRIFT

(11) **EP 2 450 696 B1**
(45) Veröffentlichungstag und Bekanntmachung des Hinweises auf die Patenterteilung: **11.09.2013**
(21) Anmeldenummer: 11188434.2
(22) Anmeldetag: 09.11.2011
(51) Int. Cl.: G01N 21/90

(54) **Vorrichtung und Verfahren zum Inspizieren von Behältnissen**
Method and device for inspecting containers
Dispositif et procédé destinés à l'inspection de récipients

(30) Priorität: 09.11.2010 DE 102010050673
(43) Veröffentlichungstag der Anmeldung: 09.05.2012
(73) Patentinhaber: Krones AG, 93073 Neutraubling (DE)
(72) Erfinder: Niedermeier, Anton, 93326 Abensberg Offenstetten (DE)
(74) Vertreter: Bittner, Bernhard

(56) Entgegenhaltungen:
- EP-A1- 1 617 208
- WO-A1-01/55705
- DE-A1- 10 065 290
- DE-A1- 10 310 273
- DE-C1- 10 017 126

## Beschreibung

Die vorliegende Erfindung bezieht sich auf eine Vorrichtung und ein Verfahren zum Inspizieren von Behältnissen. Aus dem Stand der Technik sind derartige Inspektionsmaschinen seit langem bekannt. Dabei weisen derartige Inspektionsmaschinen oder Inspektionsgeräte für Behältnisse typischerweise unterschiedliche Erkennungseinrichtungen auf. So ist es beispielsweise möglich, dass eine Mündung der Behältnisse untersucht wird, es wäre jedoch auch denkbar, dass die Seitenwand des Behältnisses (etwa nach Schwachstellen) oder auch ein Boden des Behältnisses (beispielsweise auch nach Fremdkörpern in dem Behältnis) untersucht wird.

Aus der DE 100 65 290 C2 sind ein Verfahren und eine Vorrichtung zur optischen Inspektion von Flaschen bekannt. Dabei sind Beleuchtungseinheiten vorgesehen, die in der Nähe einer Mündungsfläche und/oder des Flaschenbodens angeordnet sind. Weiterhin weist diese Vorrichtung eine Ausstoßstation zum Aussortieren verschmutzter oder defekter Flaschen auf.

Aus der DE 690 217 53 T2 sind ein Verfahren und eine Vorrichtung zum Inspizieren eines Gegenstandes oder einer Reihe aufeinanderfolgend zugeführter Gegenstände bekannt. Dabei wird eine Inspektion auf der Basis von Hellfeldbeleuchtung und der Verwendung einer ersten Art der elektromagnetischen Strahlung durchgeführt und weiterhin eine Inspektion auf der Basis von Dunkelfeldbeleuchtung unter Verwendung einer zweiten Art von elektromagnetischer Strahlung.

Die DE 100 171 26 C1 beschreibt ein Verfahren und eine Vorrichtung zur optischen Überprüfung transparenter Behälter. Dabei werden die Behälter mit Licht aus einer Beleuchtungseinrichtung beaufschlagt und Abbildungen zumindest von Behälterteilen angefertigt.

Weitere Inspektionsvorrichtungen sind aus EP 1 617 208 A1, WO 01/55705 A1 und DE 103 10 273 A1 bekannt.

Für derartige Inspektionseinrichtungen ist dabei oft die Kompaktheit und die Länge der Maschine bzw. des Gerätes entscheidend dafür, ob das Gerät bzw. die Maschine leicht in Anlagen integrierbar ist. Entsprechend größere Behandlungsmaschinen sind prinzipiell teuerer.

Auch im Falle der Behältnisinspektion werden unterschiedliche Inspekionsaufgaben, die sich nicht durch das gleiche optische Setup bewältigen lassen, zugunsten der Kompaktheit an die gleiche Stelle gelegt. Bei den unterschiedlichen optischen Setups kann es sich dabei beispielsweise um die gleiche Beleuchtung aber unterschiedliche Objektive handeln. So kann mit der gleichen Beleuchtung unterhalb des Behältnisbodens zum einen mit einer Kamera durch die Flaschenmündung der Boden und mit einer zweiten Kamera die Flascheninnenseitenwand inspiziert werden. In der Praxis finden hierzu Strahlteiler Einsatz, die über der Flaschenmündung positioniert sind. Dabei kann der Strahlteiler beispielsweise ein Teil eines Objektives einer optischen Anordnung sein oder auch in ein Linsensystem eingegliedert sein. Es können auch zwei einzelne Objektive vorhanden sein, die dem Strahlteiler nachgeschaltet sind. Daneben wäre es auch möglich, weitere Strahlteiler vorzusehen, dass heißt den bereits geteilten Strahl weiter aufzuteilen um beispielsweise eine Mündungsinspektion und weiter geteilt eine Infrarotrestflüssigkeitserkennung durchzuführen. Hierzu werden neben dem Strahlteiler gegebenenfalls zusätzlich Filter eingesetzt, die das Infrarotlicht vom sichtbaren Licht trennen.

Diese Ausführungsformen haben jedoch den Nachteil, dass das für die einzelne Erkennung relevante Signal zumindest durch einen Strahlteiler gelangt und prinzipiell dadurch geschwächt wird. Für eine sichere Inspektion ist jedoch eine Mindestsignalstärke erforderlich. Dies ist beispielsweise möglich durch einen stärkeren Sender, d. h. hier eine stärkere Beleuchtung. Eine stärkere Beleuchtung ist jedoch erheblich kostenintensiver als eine einfache Beleuchtung.

Der vorliegenden Erfindung liegt daher die Aufgabe zugrunde, ein geeignetes Verfahren und eine Anordnung zur Verfügung zu stellen, welche den besagten Nachteil vermeidet, andererseits jedoch die Inspektionsgeräte oder Maschinen nicht nennenswert vergrößert.

Diese Aufgabe wird durch die Gegenstände der unabhängigen Ansprüche gelöst. Vorteilhafte Ausführungsformen und Weiterbildungen sind Gegenstand der Unteransprüche.

Eine Vorrichtung zum Inspizieren von Behältnissen weist eine Beleuchtungseinrichtung auf, welche die Behältnisse beleuchtet. Weiterhin weist die Vorrichtung eine Transporteinrichtung auf, welche die Behältnisse entlang eines vorbestimmten Transportpfads gegenüber der Beleuchtungseinrichtung transportiert. Daneben ist wenigstens eine erste Beobachtungseinrichtung vorgesehen, welche einen ersten Bereich der Behältnisse beobachtet und wenigstens ein Bild des beobachteten ersten Bereichs aufnimmt. Weiterhin ist wenigstens eine zweite Beobachtungseinrichtung vorgesehen, die einen zweiten Bereich der Behältnisse beobachtet und wenigstens ein Bild des zweiten beobachteten Bereichs aufnimmt, wobei wenigstens ein Teil der Beleuchtungseinrichtung sowohl zur Beleuchtung des von der ersten Beobachtungseinrichtung beobachteten ersten Bereichs der Behältnisse als auch zur Beleuchtung des von der zweiten Beobachtungseinrichtung beobachteten zweiten Bereichs der Behältnisse dient.

Erfindungsgemäß nehmen die erste Beobachtungseinrichtung und die zweite Beobachtungseinrichtung die Bilder der Bereiche der Behältnisse an unterschiedlichen Positionen der Behältnisse entlang des Transportpfades auf.

Es wird daher vorgeschlagen, die Erkennungen zwar einerseits nicht an einem Ort vorzunehmen, aber andererseits auch nicht vollständig getrennt an zwei unabhängigen Orten durchzuführen. Vielmehr werden die Erkennungen bzw. Beobachtungen der Behältnisse so ineinander verzahnt, dass jede für sich unabhängig agiert, aber auch Teile der anderen Erkennung - insbesondere die Beleuchtungseinrichtung oder Teile hiervon - für sich benutzen kann. Vorteilhaft handelt es sich bei einer Beobachtungseinrichtung um eine Beobachtungseinrichtung, welche einen Boden des Behältnisses beobachtet. Vorteilhaft handelt es sich ebenfalls bei einer der Beobachtungseinrichtungen um eine solche Beobachtungseinrichtung, welche eine Seitenwand des Behältnisses beobachtet. Es wird also vorgeschlagen, dass die Beleuchtungseinrichtung zumindest teilweise zur Beleuchtung beider Bereiche eingesetzt wird. Auf diese Weise kann die Vorrichtung sehr kompakt gebaut werden.

Es wird daher ein System vorgeschlagen, mit dem zwei oder mehrere Inspektionssysteme bedient werden können. Auf diese Weise wäre beispielsweise eine Kombination einer Boden-, Innenwand-, Gewinde- und evtl. einer weiterer Bodeninspektion denkbar. Eine Beleuchtungseinrichtung bzw. Lampe könnte bei der vorgeschlagenen Gestaltung in einem Gehäuse untergebracht werden, was kostengünstiger ist.

Vorteilhaft werden die besagten Bereiche der Behältnisse in Durchlichtverfahren beobachtet, d. h. die zu beobachtenden Behältnisse werden vorteilhaft zwischen der Beleuchtungseinrichtung und der Beobachtungseinrichtung transportiert.

Bei den Behältnissen handelt es sich insbesondere um Flaschen, wie beispielsweise Glasflaschen und/oder Kunststoffflaschen. Gegebenenfalls könnte die Vorrichtung jedoch auch eingesetzt werden, um Kunststoffvorformlinge zu inspizieren, welche wiederum zur Umformung zu Kunststoffbehältnissen dienen. Bevorzugt handelt es sich bei dem ersten Bereich um einen Bodenbereich der Behältnisse und bei dem zweiten Bereich um einen Innenseitenwandbereich der Behältnisse.

Bei einer weiteren vorteilhaften Ausführungsform unterscheiden sich ein erster Beobachtungspfad, entlang dessen die erste Beobachtungseinrichtung die Behältnisse beobachtet und ein zweiter Beobachtungspfad, entlang dessen die zweite Beobachtungseinrichtung die Behältnisse beobachtet, vollständig voneinander. Es wird daher vorgeschlagen, dass die beiden Beobachtungspfade bevorzugt strahlteilerfrei ausgeführt sind. Auf diese Weise steht jeweils die komplette Beleuchtungsleistung der einzelnen Segmente für den jeweiligen Beobachtungsvorgang zur Verfügung.

Vorteilhaft sind der erste Beobachtungspfad und der zweite Beobachtungspfad nahezu parallel zueinander. Hierunter wird insbesondere verstanden, dass zumindest eine Symmetrieachse des ersten Beobachtungspfads und eine Symmetrieachse des zweiten Beobachtungspfads parallel zueinander sind.

Bei einer weiteren vorteilhaften Ausführungsform sind die Beobachtungseinrichtungen entlang des Transportpfades der Behältnisse unmittelbar hintereinander angeordnet. Dabei ist es möglich, dass diese Beobachtungseinrichtungen in einem gemeinsamen Gehäuse angeordnet sind. Es wäre jedoch auch möglich, dass die Beobachtungseinrichtungen getrennte Objektive aufweisen.

Bei einer weiteren vorteilhaften Ausführungsform weist die Beleuchtungseinrichtung mehrere Beleuchtungssegmente auf, wobei wenigstens ein Beleuchtungssegment zur Beleuchtung beider Bereiche der Behältnisse dient. So wird es beispielsweise möglich, dass die Beleuchtungseinrichtung drei in der Transportrichtung der Behältnisse hintereinander angeordnete Beleuchtungssegmente aufweist, wobei für die erste Beobachtung das erste und zweite Segment aktiviert werden und für die zweite Beobachtung das zweite und dritte Segment aktiviert werden. Dabei wäre es auch möglich, dass die Beleuchtungssegmente unterschiedliche Lichtwellenlängen aussenden. Vorteilhaft weisen die Beleuchtungssegemente eine oder eine Vielzahl von Lichtquellen auf, welche die Beleuchtung jeweils bewirken.

Bei einer weiteren vorteilhaften Ausführungsform ist die Beleuchtungseinrichtung unterhalb der Behältnisse angeordnet. Dies bedeutet, dass die Behältnisse von unten her beleuchtet werden. Dabei ist es beispielsweise möglich, dass die Transporteinrichtung die Behältnisse über eine transparente Platte führt oder dass die Behältnisse hängend beispielsweise an einem Tragring transportiert werden.

Bei einer weiteren vorteilhaften Ausführungsform ist wenigstens eine Beobachtungseinrichtung und sind bevorzugt beide Beobachtungseinrichtungen oberhalb der Behältnisse angeordnet. Die Beobachtungspfade verlaufen dabei vorteilhaft im Wesentlichen parallel zu einer Längsachse des zu beobachtenden Behältnisses. Vorteilhaft findet die Beobachtung in einer im Wesentlichen vertikalen Richtung statt.

Bei einer vorteilhaften Ausführungsform weist die Beleuchtungseinrichtung ein Basissegment, welches zur Beobachtung mit beiden Beobachtungseinrichtungen dient, sowie wenigstens ein Zusatzsegment, welches nur zur Beobachtung mit einer der beiden Beobachtungseinrichtungen dient, auf. Dabei ist es bevorzugt möglich, dass die Beleuchtungseinrichtung modular aufgebaut ist und je nach den Anforderungen um weitere Beleuchtungssegmente erweiterbar ist. So könnte die Beleuchtungseinrichtung beispielsweise in der Art eines Stecksatzes aufgebaut sein, bei dem nach Bedarf weitere Beleuchtungssegmente hinzugefügt werden.

Neben der ersten und der zweiten Beobachtungseinrichtung können auch weitere Beobachtungseinrichtungen vorgesehen sein, um so mehr als zwei Inspektionsaufgaben gleichzeitig bewältigen zu können. Die Beleuchtungseinrichtung kann dabei für sämtliche Inspektionsaufgaben eingesetzt werden. Die Beleuchtungseinrichtung kann auch in der Art eine Beleuchtungs - Lauffläche ausgebildet sein, wobei die Beleuchtung mit den transportierten Behältnissen mitwandert. Daneben können sich auch geometrische Formen der Beleuchtung ändern beispielsweise von einer kreisförmigen Beleuchtung zu einer rechteckigen Beleuchtung.

Die vorliegende Erfindung ist weiterhin auf ein Verfahren zum Inspizieren von Behältnissen gerichtet, wobei eine Beleuchtungseinrichtung die Behältnisse beleuchtet und eine Transporteinrichtung die Behältnisse entlang eines vorbestimmten Transportpfades gegenüber der Beleuchtungseinrichtung transportiert. Weiterhin beobachtet eine erste Beobachtungseinrichtung einen ersten Bereich der Behältnisse und nimmt wenigstens ein Bild des beobachteten ersten Bereiches auf und eine zweite Beobachtungseinrichtung beobachtet einen zweiten Bereich der Behältnisse und nimmt ebenfalls wenigstens ein Bild des zweiten beobachteten Bereiches auf. Dabei dient wenigstens ein Teil der Beleuchtungseinrichtung sowohl zur Beleuchtung der von der ersten Beobachtungseinrichtung beobachteten ersten Bereiche der Behältnisse, als auch zur Beleuchtung der von der zweiten Beobachtungseinrichtung beobachteten zweiten Bereiche der Behältnisse.

Erfindungsgemäß nehmen die erste Beobachtungseinrichtung und die zweite Beobachtungseinrichtung die Bilder der Bereiche an unterschiedlichen Positionen der Behältnisse entlang des Transportpfades auf.

Vorteilhaft nehmen die beiden Beobachtungseinrichtungen die jeweiligen Bilder desselben Behältnisses zeitversetzt zueinandner auf. Dabei ist es möglich, dass in Abhängigkeit von einer Position des Behältnisses die jeweiligen Aufnahmen durch die Beobachtungseinrichtungen ausgelöst werden. Bei einem vorteilhaften Verfahren nehmen die Beobachtungseinrichtungen jeweils ortsaufgelöste Bilder der untersuchten Behältnisse auf. Auch wäre es möglich, dass in Abhängigkeit von einer Transportgeschwindigkeit der Behältnisse die beiden Beobachtungen bzw. Bildaufnahmen hintereinander zeitversetzt ausgelöst werden.

Vorzugsweise sind die beiden Beobachtungspfade in einem Abstand zueinander angeordnet, der geringer ist als 50 cm, bevorzugt geringer als 40 cm, besonders bevorzugt geringer als 30 cm, besonders bevorzugt geringer als 20 cm und besonders bevorzugt geringer als 15 cm.

Weitere Vorteile und Ausführungsform ergeben sich aus den beigefügten Zeichnungen.

Darin zeigen:
- Fig. 1: eine Vorrichtung zum Inspizieren von Behältnissen nach dem Stand der Technik; und
- Fig. 2: eine schematische Darstellung einer erfindungsgemäßen Vorrichtung zum Inspizieren von Behältnissen.

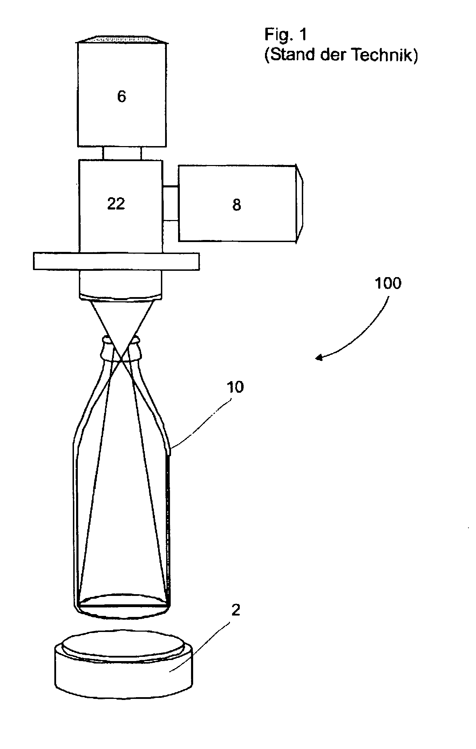

Fig. 1 zeigt eine Vorrichtung 100 aus dem Stand der Technik zum Inspizieren von Behältnissen. Dabei werden Behältnisse 10 mittels einer Beleuchtungseinrichtung 2 beleuchtet und mit zwei Beobachtungseinrichtungen 6 und 8 beobachtet. Das Bezugszeichen 22 kennzeichnet eine Strahlteilereinrichtung, welche das von dem Behältnis ausgehende Licht auf die beiden Beobachtungseinrichtung 6 und 8 aufteilt. Dabei muss die Beleuchtungseinrichtung 2 hier so stark ausgeführt sein, dass trotz der Strahlteilung das Licht noch ausreichend ist, damit beide Beobachtungseinrichtungen 6 und 8 ein jeweils geeignetes Bild des Behältnisses aufnehmen können.

In diesem Falle ist ein Spezialobjektiv vorgesehen, welches den besagten Strahlteiler 22 enthält.

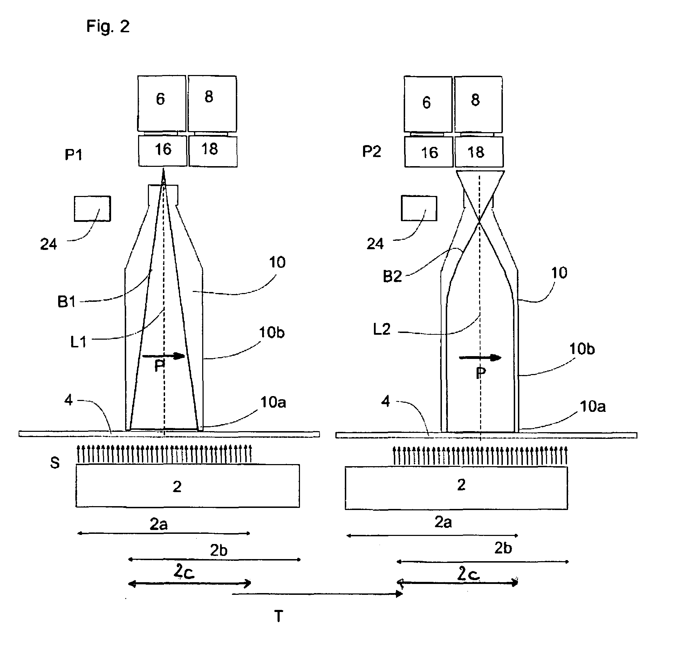

Fig. 2 zeigt eine schematische Darstellung einer erfindungsgemäßen Vorrichtung. Hier ist wiederum eine Beleuchtungseinrichtung 2 vorgesehen, welche zur Beleuchtung der Behältnisse 10 bzw. sowohl des Bodens 10a der Behältnisse als auch der Innenwand 10b der Behältnisse dient. Weiterhin ist eine Transporteinrichtung 4 vorgesehen, die die Behältnisse entlang des Transportpfades T transportiert. Die beiden in Fig. 2 gezeigten Darstellungen zeigen zwei Bildaufnahmesituationen. Im linken Teilbild nimmt die Beobachtungseinrichtung 6 über das Objektiv 16 ein Bild des Behältnisses 10 auf und in dem rechten Teilbild nimmt die Beobachtungseinrichtung 8 mittels des Objektivs 18 ein Bild des Behältnisses auf. Dabei blickt die Beobachtungseinrichtung 6 und vorteilhaft auch die Beobachtungseinrichtung 8 durch eine Mündung in das Innere des Behältnisses.

Das Bezugszeichen B1 kennzeichnet dementsprechend den Beobachtungspfad unter dem die erste Beobachtungseinrichtung den Behältnisboden 10a beobachtet und das Bezugszeichen B2 den Beobachtungspfad, unter dem die zweite Beobachtungseinrichtung 8 die Behältnisinnenwandung 10b beobachtet. Die vertikale Linie L1 kennzeichnet eine Symmetrieachse des Beobachtungspfads B1 und fällt hier mit einer Längsrichtung des Behältnisses zusammen. Entsprechend kennzeichnet das Bezugszeichen L2 in dem rechten Teilbild eine Symmetrieachse des Beobachtungspfads B2 und fällt auch hier mit der Längsrichtung des Behältnisses zusammen. Daher sind die beiden Symmetrieachsen L1 und L2 hier parallel zueinander.

Die Inspektion des Bodens 10a und die Inspektion der Innenseitenwand 10b des Behältnisses unterscheiden sich hier lediglich in der Art des jeweils eingesetzten Objektivs 16, 18. Im Stand der Technik wurde, wie oben erwähnt, eine Lösung mit Strahlteilern vorgesehen, oder auch ein sogenanntes Kombiobjektiv. Beide vorgenommenen Erkennungen arbeiten hier vorteilhaft mit einer diffusen Beleuchtung durch die Beleuchtungseinrichtung 2, welche unterhalb des Flaschenbodens 10a angeordnet ist. Vorteilhaft ist das Leuchtfeld der Beleuchtungseinrichtung größer als die zu inspizierende Bodenfläche. Auf diese Weise werden die Eigenschaften von Wassertropfen und Glasprägungen, wie die geriffelte Standfläche eines Glasflaschenbodens, gleichmäßig ausgeleuchtet.

Je entfernter die Beleuchtungseinrichtung von dem Behältnisboden 10a ist, desto größer sollte die Beleuchtungseinrichtung 2 ausgeführt sein. Bei einer vorteilhaften Ausführungsform kann die Beleuchtungseinrichtung des Behältnisbodens 10a einen Durchmesser von beispielsweise 120 mm aufweisen. Wie in dem linken Teilbild von Fig. 2 gezeigt, sind hier nicht alle Segmente der Beleuchtungseinrichtung aktiviert, sondern jeweils nur die Segmente, die Licht entlang der Strahlrichtung S auf den Flaschenboden richten. Dabei ist hier die Beleuchtungseinrichtung 2 lediglich entlang der dargestellten Länge 2a aktiviert.

Die Beleuchtungseinrichtung kann jedoch auch andere geometrische Formen, wie Rechtecke oder Quadrate aufweisen. Im Stand der Technik ist ein Beleuchtungsdurchmesser von 120 mm mit mindestens der doppelten, üblicherweise wegen des Verlusts am Strahlteiler jedoch dreifachen Lichtintensität vorgesehen.

Ein weiterer Vorzug der gemeinsamen Leuchtfläche ergibt sich aus dem gemeinsamen Gehäuse einer größeren Lichtfläche. Dieses verhindert einerseits das Zerklüften der Einheiten und unterstützt damit den Hygienegedanken, andererseits kann mit diesem gemeinsamen Gehäuse eine kaskadierbare Leuchtfläche geschaffen werden. Damit soll eine Basisleuchtfläche 2a geschaffen werden an die die Fläche aus z.B. 2 minus 2a als Erweiterungsbeleuchtung angebracht werden kann. Das würde natürlich für jede weitere Station ebenso gelten.

Bei der erfindungsgemäßen Vorrichtung wird die Bodenbeleuchtung lediglich mit der einfachen Intensität verwendet und in der Transportrichtung T bzw. entlang des Transportpfads P um diejenige Strecke verlängert, welche die beiden Kamerasysteme 6 und 8 einschließlich deren Objektive 16 und 18 nacheinander benötigen. Gegenüber aus dem Stand der Technik bekannten Beleuchtungseinrichtungen ist daher die in Fig. 2 gezeigte Beleuchtungseinrichtung 2 um zwischen 20 mm und 80 mm, vorzugsweise zwischen 30 mm und 50 mm verlängert. Auf diese Weise entsteht eine Kombination aus unabhängigen Erkennungen ohne den Nachteil eines Strahlteilers.

In dem rechten Teilbild wird ein Bild der Behältnisinnenwandung mit der zweiten Beobachtungseinrichtung 8 aufgenommen. Die Bezugszeichen P1 und P2 beziehen sich dabei jeweils auf (unterschiedliche) Positionen des Behältnisses gegenüber der Beleuchtungseinrichtung 2 bzw. gegenüber den Beobachtungseinrichtungen 6 und 8. Sowohl die Beleuchtungseinrichtung 2 als auch die Beobachtungseinrichtungen 6 und 8 sind hier jeweils stationär angeordnet. Das Bezugszeichen 4 kennzeichnet grob schematisch eine Transporteinrichtung, welche die Behältnisse bewegt. Dabei kann es sich beispielsweise um ein (vorzugsweise transparentes) Transportband handeln, es wäre jedoch auch möglich, wie oben erwähnt, dass die Behältnisse nicht am Boden geführt werden, sondern beispielsweise an einem Halsbereich geführt werden. Auch wäre eine Führung der Behältnisse an ihrer Außenwandung, beispielsweise über seitliche Führungsbänder möglich.

Bei den in Fig. 2 gezeigten Beispielen liegen die Ausmaße der Beleuchtungseinrichtung bei ca. 120 x 160 mm, wobei eine einfache Strahlungsintensität verwendet wird. Dies bedeutet, dass die erfindungsgemäße Beleuchtungseinrichtung mindestens 50% weniger hinsichtlich des Produktes aus Fläche und Intensität gegenüber dem Stand der Technik benötigt und dabei jedoch nur unmerklich länger auszuführen ist.

Die in Fig. 2 gezeigte Beleuchtung kann dabei, wie oben erwähnt, in überlappende Beleuchtungssegmente 2a und 2b unterteilt werden, es wäre jedoch auch möglich, dass die Beleuchtungseinrichtung im Ganzen betrieben wird. Das Bezugszeichen 2c bezieht sich auf ein überlappendes Segment, welches für beide Inspektionsvorgänge Anwendung findet. Wie oben erwähnt, kann sich hier die Beleuchtungseinrichtung 2 modular aus drei Segmenten 2a, 2b und 2c zusammensetzen.

Vorzugsweise wird die Beleuchtungseinrichtung 2 nicht kontinuierlich, sondern gepulst betrieben. Dabei wird vorteilhaft eine Position des Behältnisses 10 entlang des Transportpfades P festgestellt und an bestimmten Positionen sowohl die Beleuchtung der Beleuchtungseinrichtung ausgelöst als auch die Bildaufnahme durch die Beobachtungseinrichtungen 6 bzw. 8. Pro Flasche werden daher vorteilhaft zeitlich hintereinander zwei Bilder des Behältnisses aufgenommen, einmal ein Bild des Behältnisbodens und einmal ein Bild der Behältnisinnenwandung. Damit werden im Vergleich zum Stand der Technik die Bilder auch in zeitlicher Abfolge aufgenommen. Der zeitliche Abstand zwischen den Bildaufnahmen richtet sich dabei nach der Transportgeschwindigkeit des Behältnisses 10 entlang des Transportpfades P. Es wäre weiterhin auch möglich, unterschiedliche Wellenlängen in den einzelnen, jedoch überlappenden Beleuchtungssegmenten zu verwenden. Auch wäre es möglich, dass eine Teilbeleuchtung eine Untermenge der anderen Teilbeleuchtung ist. Das beinhaltet den Vorteil, dass niemals die gesamte Leuchtfläche aktiviert werden muss und demzufolge die Leistungsbereitstellung lediglich für ca. 2/3 der Leuchtfläche dimensioniert sein muss.

Die Vorrichtung kann weiterhin Positionserfassungseinrichtungen 24 wie beispielsweise Lichtschranken aufweisen, welche eine Position der Behältnisse gegenüber den Beobachtungseinrichtungen 6, 8 bestimmen. In Reaktion auf ein Signal der Positionserfassungseinrichtung kann dabei die Aufnahme von Bildern durch die Beobachtungseinrichtungen 6, 8 ausgelöst werden. Vorteilhaft transportiert die Transporteinrichtung die Behältnisse mit einem vorgegebenen Abstand zueinander. Dieser Abstand liegt dabei zwischen 1 cm und 20 cm, bevorzugt zwischen 2 cm und 15 cm und besonders bevorzugt zwischen 3 cm und 15 cm. Die Beleuchtungseinrichtung kann weiterhin eine (nicht gezeigte) Streueinrichtung aufweisen, um diffuses Licht zu erzeugen.

Die Anmelderin behält sich vor, sämtliche in den Anmeldungsunterlagen offenbarten Merkmale als erfindungswesentlich zu beanspruchen, sofern sie einzeln oder in Kombination gegenüber dem Stand der Technik neu sind.

### Bezugszeichenliste

- 2: Beleuchtungseinrichtung
- 2a: überlappende Beleuchtungssegmente
- 2b: überlappende Beleuchtungssegmente
- 2c: gemeinsames Beleuchtungssegment oder Basissegment
- 4: Transporteinrichtung
- 6, 8: Beobachtungseinrichtung, Kamerasysteme
- 10: Behältnisse
- 10a: Boden
- 10b: Innenwand
- 16: Objektiv
- 18: Objektiv
- 22: Strahlteileinrichtung
- 24: Positionserfassungseinrichtung
- P1, P2: Positionen des Behältnisses
- 100: Vorrichtung
- P: Transportpfad
- T: Transportrichtung
- S: Strahl
- B1: erster Beobachtungspfad
- B2: zweite Beobachtungspfad
- L1: Symmetrieachse des ersten Beobachtungspfads
- L2: Symmetrieachse des zweiten Beobachtungspfads

## Patentansprüche

1. Vorrichtung (1) zum Inspizieren von Behältnissen (10), mit einer Beleuchtungseinrichtung (2), welche die Behältnisse (10) beleuchtet, mit einer Transporteinrichtung (4), welche die Behältnisse (10) entlang eines vorbestimmten Transportpfads (P) gegenüber der Beleuchtungseinrichtung (2) transportiert, mit wenigstens einer ersten Beobachtungseinrichtung (6), welche einen ersten Bereich der Behältnisse (10) beobachtet und wenigstens ein Bild des beobachteten ersten Bereichs aufnimmt und mit wenigstens einer zweiten Beobachtungseinrichtung (8), die einen zweiten Bereich der Behältnisse (10) beobachtet und wenigstens ein Bild des zweiten beobachteten Bereichs aufnimmt, wobei wenigstens ein Teil der Beleuchtungseinrichtung (2) sowohl zur Beleuchtung des von der ersten Beobachtungseinrichtung (6) beobachteten ersten Bereichs der Behältnisse (10) als auch zur Beleuchtung des von der zweiten Beobachtungseinrichtung (8) beobachteten zweiten Bereichs der Behältnisse (10) dient,wobei
die erste Beobachtungseinrichtung (6) und die zweite Beobachtungseinrichtung (8) die Bilder der Bereiche der Behältnisse (10) an unterschiedlichen Positionen (P1, P2) der Behältnisse (10) entlang des Transportpfades (P) aufnehmen,
**dadurch gekennzeichnet, dass**
die Beleuchtungseinrichtung (2) unterhalb der Behältnisse und wenigstens eine Beobachtungseinrichtung und bevorzugt beide Beobachtungseinrichtungen (6, 8) oberhalb der Behältnisse (10) angeordnet sind, wobei die Beleuchtungseinrichtung (2) mehrere Beleuchtungssegmente (2a, 2b, 2c) aufweist und wenigstens ein Beleuchtungssegment sowohl zur Beleuchtung des ersten Bereiches, welcher ein Bodenbereich der Behältnisse (10) sowie auch zur Beleuchtung des zweiten Bereiches, welcher ein Innenseitenwandbereich der Behältnisse (10) ist, dient.

2. Vorrichtung (1) nach Anspruch 1
**dadurch gekennzeichnet, dass**
die Beobachtungseinrichtungen (6, 8) entlang des Transportpfades (P) der Behältnisse (10) unmittelbar hintereinander angeordnet sind.

3. Vorrichtung (1) nach Anspruch 1,
**dadurch gekennzeichnet, dass**
sich ein erster Beobachtungspfad (B1), entlang dessen die erste Beobachtungseinrichtung (6) die Behältnisse (10) beobachtet und ein zweiter Beobachtungspfad (B2), entlang dessen die zweite Beobachtungseinrichtung (8) die Behältnisse (10) beobachtet, vollständig unterscheiden.

4. Vorrichtung (1) nach Anspruch 3,
**dadurch gekennzeichnet, dass**
der erste Beobachtungspfad (B1) und der zweite Beobachtungspfad (B2) parallel zueinander sind.

5. Vorrichtung (1) nach Anspruch 1,
**dadurch gekennzeichnet, dass**
die Beleuchtungseinrichtung ein Basissegment (2c), welches zur Beobachtung mit beiden Beobachtungseinrichtungen (6,8) dient, sowie wenigstens ein Zusatzsegment (2a, 2b), welches nur zur Beobachtung mit einer der beiden Beobachtungseinrichtungen dient, aufweist.

6. Verfahren zum Inspizieren von Behältnissen (10), wobei eine Beleuchtungseinrichtung (2), die Behältnisse (10) beleuchtet und eine Transporteinrichtung (4) die Behältnisse (10) entlang eines vorbestimmten Transportpfads (P) gegenüber der Beleuchtungseinrichtung (2) transportiert, und eine erste Beobachtungseinrichtung (6) einen ersten Bereich der Behältnisse (10) beobachtet und wenigstens ein Bild des beobachteten ersten Bereichs aufnimmt und eine zweite Beobachtungseinrichtung (8), einen zweiten Bereich der Behältnisse (10) beobachtet und wenigstens ein Bild des zweiten beobachteten Bereichs aufnimmt, wobei wenigstens ein Teil der Beleuchtungseinrichtung (2) sowohl zur Beleuchtung der von der ersten Beobachtungseinrichtung (6) beobachteten ersten Bereiche der Behältnisse (10) als auch zur Beleuchtung der von der zweiten Beobachtungseinrichtung (8) beobachteten Bereiche der Behältnisse (10) dient, wobei
die erste Beobachtungseinrichtung (6) und die zweite Beobachtungseinrichtung (8) die Bilder der Bereiche der Behältnisse (10) an unterschiedlichen Positionen (P1, P2) der Behältnisse (10) entlang des Transportpfades (P) aufnehmen **dadurch gekennzeichnet, dass**
mittels der Beleuchtungseinrichtung (2), welche unterhalb der Behältnisse angeordnet ist und mehrere Beleuchtungssegmente aufweist wenigstens durch eines der Beleuchtungssegmente sowohl der erste Bereich, welcher ein Bodenbereich der Behältnisses (10) ist sowie auch der zweite Bereiche, welcher ein Innenseitenwandbereich der Behältnisses (10) ist, beleuchtet wird.

## Claims

1. Device (1) for inspecting containers (10) with an illumination device (2) which illuminates the containers (10), with a transport device (4) which transports the containers (10) along a predetermined transport path (P) in relation to the illumination device (2), with at least one first observation device (6) which observes a first region of the containers (10) and records at least one image of the first observed region and with at least one second observation device (8) which observes a second region of the containers (10) and records at least one image of the second observed region, wherein at least one part of the illumination device (2) serves both to illuminate the first region of the containers (10) observed by the first observation device (6) and to illuminate the second region of the containers (10) observed by the second observation device (8), wherein the first observation device (6) and the second observation device (8) record images of the regions of the containers (10) at different positions (P1, P2) of the containers (10) along the transport path (P),**characterized in that** the illumination device (2) is arranged below the containers and at least one observation device and preferably both observation devices (6, 8) are arranged above the containers (10), wherein the illumination device (2) comprises several illumination elements (2a, 2b, 2c) and at least one illumination segment serves both for illuminating the first region which is a bottom area of the containers (10) and for illuminating the second region which is an internal lateral wall of the container (10).

2. Device (1) according to claim 1, **characterised in that** the observation devices (6, 8) are arranged in direct succession along the transport path (P) of the containers (10).

3. Device (1) according to claim 1, **characterised in that** a first observation path (B1) along which the first observation device (6) observes the containers (10) and a second observation path (B2) along which the second observation device (8) observes the containers (10) are completely different.

4. Device (1) according to claim 3, **characterised in that** the first observation path (B1) and the second observation path (B2) are parallel to each other.

5. Device (1) according to claim 1, **characterised in that** the illumination device comprises a base segment (2c) which serves for observation with both observation devices (6, 8), and at least one additional segment (2a, 2b) which serves for observation with only one of the two observation devices.

6. Method for inspecting containers (10), wherein an illumination device (2) illuminates the containers (10) and a transport device (4) transports the containers (10) along a predetermined transport path (P) in relation to the illumination device (2), and a first observation device (6) observes a first region of the containers (10) and records at least one image of the observed first region and a second observation device (8) observes a second region of the containers (10) and records at least one image of the second observed region, wherein at least one part of the illumination device (2) serves to illuminate both the first regions of the containers (10) observed by the first observation device (6) and to illuminate the regions of the containers (10) observed by the second observation device (8), wherein the first observation device (6) and the second observation device (8) record images of the regions of the containers (10) at different positions (P1, P2) of the containers (10) along the transport path (P), **characterized in that** by means of the illumination device (2) which is arranged below the containers and comprises several illumination segments, not only a first region which is a bottom area of the container (10) but also the second area which is an inner lateral wall region of the container (10) is illuminated, by means of at least one of the illumination segments.

## Revendications

1. Dispositif (1) pour inspecter des récipients (10), comprenant un système d'éclairage (2) qui éclaire les récipients (10), un système de transport (4) qui transporte les récipients (10) le long d'un trajet de transport (P) prédéterminé par rapport au système d'éclairage (2), au moins un premier système d'observation (6) qui observe une première zone des récipients (10) et prend au moins une image de la première zone observée, et au moins un deuxième système d'observation (8) qui observe une deuxième zone des récipients (10) et prend au moins une image de la deuxième zone observée, dans lequel au moins une partie du système d'éclairage (2) sert aussi bien à l'éclairage de la première zone des récipients (10) observée par le premier système d'observation (6) qu'à l'éclairage de la deuxième zone des récipients (10) observée par le deuxième système d'observation (8), dans lequel
le premier système d'observation (6) et le deuxième système d'observation (8) prennent les images des zones des récipients (10) dans différentes positions (P1, P2) des récipients (10) le long du trajet de transport (P),
**caractérisé en ce**
**que** le système d'éclairage (2) est disposé sous les récipients, et au moins un système d'observation et de préférence les deux systèmes d'observation (6, 8) sont disposés au-dessus des récipients (10), le système d'éclairage (2) présentant plusieurs segments d'éclairage (2a, 2b, 2c) et au moins un segment d'éclairage servant aussi bien à l'éclairage de la première zone qui est une zone du fond des récipients (10), qu'à l'éclairage de la deuxième zone qui est une zone des parois latérales intérieures des récipients (10).

2. Dispositif (1) selon la revendication 1,
**caractérisé en ce**
**que** les systèmes d'observation (6, 8) sont disposés immédiatement l'un derrière l'autre le long du trajet de transport (P) des récipients (10).

3. Dispositif (1) selon la revendication 1,
**caractérisé en ce**
**qu'**un premier trajet d'observation (B1), le long duquel le premier système d'observation (6) observe les récipients (10), et un deuxième trajet d'observation (B2), le long duquel le deuxième système d'observation (8) observe les récipients (10), sont complètement différents.

4. Dispositif (1) selon la revendication 3,
**caractérisé en ce**
**que** le premier trajet d'observation (B1) et le deuxième trajet d'observation (B2) sont parallèles entre eux.

5. Dispositif (1) selon la revendication 1,
**caractérisé en ce**
**que** le système d'éclairage présente un segment de base (2c) qui sert à l'observation avec les deux systèmes d'observation (6, 8), ainsi qu'au moins un segment supplémentaire (2a, 2b) qui sert uniquement à l'observation avec l'un des deux systèmes d'observation.

6. Procédé pour inspecter des récipients (10), dans lequel un système d'éclairage (2) éclaire les récipients (10) et un système de transport (4) transporte les récipients (10) le long d'un trajet de transport (P) prédéterminé par rapport au système d'éclairage (2), et un premier système d'observation (6) observe une première zone des récipients (10) et prend au moins une image de la première zone observée et un deuxième système d'observation (8) observe une deuxième zone des récipients (10) et prend au moins une image de la deuxième zone observée, au moins une partie du système d'éclairage (2) servant aussi bien à l'éclairage des premières zones des récipients (10) observées par le premier système d'observation (6), qu'à l'éclairage des zones des récipients (10) observées par le deuxième système d'observation (8), dans lequel
le premier système d'observation (6) et le deuxième système d'observation (8) prennent les images des zones des récipients (10) dans différentes positions (P1, P2) des récipients (10) le long du trajet de transport (P),
**caractérisé en ce**
**qu'**aussi bien la première zone qui est une zone du fond des récipients (10), que la deuxième zone qui est une zone des parois latérales intérieures des récipients (10) sont éclairées au moyen du système d'éclairage (2) qui est disposé sous les récipients et présente plusieurs segments d'éclairage, au moins par un des segments d'éclairage.
